# FASCICULE DE BREVET EUROPEEN

(11) **EP 2 643 580 B1**
(45) Date de publication et mention de la délivrance du brevet: **25.05.2016**
(21) Numéro de dépôt: 11794548.5
(22) Date de dépôt: 14.11.2011
(51) Int. Cl.: F02K 9/52

(54) **TÊTE D'INJECTION D'UNE CHAMBRE DE COMBUSTION D'UN MOTEUR-FUSÉE.**
EINSPRITZKOPF FÜR RAKETENBRENNKAMMER
ROCKET ENGINE COMBUSTION CHAMBER INJECTION HEAD

(30) Priorité: 23.11.2010 FR 1059635
(43) Date de publication de la demande: 02.10.2013
(73) Titulaire: Snecma, 75015 Paris (FR)
(72) Inventeur: INDERSIE, Dominique, Jean, Etienne, F-27200 Vernon (FR); BACHELET, Julien, F-27160 Bemecourt (FR); DELAHAYE, Olivier, F-76350 Oissel (FR)
(74) Mandataire: Intès, Didier Gérard André
(86) Numéro de dépôt international: PCT/FR2011/052629
(87) Numéro de publication internationale: WO 2012/069728

(56) Documents cités:
- US-A- 4 621 492
- US-A- 5 660 039
- US-A- 5 787 702
- US-A- 5 983 626

## Description

L'invention se rapporte à une tête d'injection d'une chambre de combustion d'un moteur fusée comportant un conduit d'alimentation en ergol, une cavité annulaire de répartition de l'ergol dans laquelle débouche le conduit d'alimentation, et, venant fermer une face de la cavité de répartition, une plaque d'injection dans laquelle sont percés des trous destinés à accueillir des injecteurs, afin d'injecter l'ergol dans la chambre de combustion du moteur. Elle concerne plus particulièrement la répartition de l'ergol dans cette tête d'injection avant son injection dans la chambre de combustion. L'invention s'applique notamment au domaine des chambres de combustion, qu'elles soient propulsives ou appartenant à un générateur de gaz ou à une préchambre, de moteurs-fusées aussi bien civils que militaires. Un moteur-fusée selon l'art antérieur est divulgué dans US 5,983,626.

Dans une tête d'injection du type précédent, il est nécessaire d'assurer une bonne répartition, la plus uniforme possible, du premier ergol sur l'ensemble de la plaque d'injection afin d'assurer un mélange optimal entre les deux ergols et donc une meilleure combustion.

Toutefois, dans la plupart des cas, l'alimentation en ergol dans la cavité de répartition est effectuée à partir de la périphérie de cette cavité : il en découle que les injecteurs situés à la périphérie sont souvent favorisés au détriment des injecteurs centraux. On observe alors des écarts importants de pression ou de débit entre l'extérieur et le centre de la plaque d'injection.

Pour remédier à ce problème, un certain nombre de solutions sont habituellement mises en place pour assurer une bonne répartition de l'ergol. Cette fonction peut ainsi être remplie par une géométrie ad hoc de la cavité de répartition ou la mise en place de volutes évolutives au sein de la cavité.

Malheureusement, de telles solutions sont coûteuses, peu pratiques, et parfois peu efficaces. La mise en place d'une géométrie de cavité ad hoc par exemple est complexe et génère de nombreuses contraintes mécaniques et thermiques qui impliquent la mise en place de structures épaisses et donc très pesantes : cet excès de masse structurelle entraîne naturellement un surcoût important à l'utilisation. L'utilisation de volutes quant à elle implique des procédés de fabrication complexes et donc coûteux.

La présente invention permet de résoudre tous ces problèmes.

Plus particulièrement, l'invention concerne une tête d'injection d'une chambre de combustion d'un moteur-fusée telle que divulguée dans la revendication 1, comprenant un conduit d'alimentation en ergol, une cavité de répartition de l'ergol, annulaire, dans laquelle débouche le conduit d'alimentation, une plaque d'injection venant fermer une face de la cavité de répartition dans laquelle sont percés des trous destinés à accueillir des injecteurs afin d'injecter l'ergol dans la chambre de combustion, caractérisée en ce qu'elle comprend en outre une grille de répartition de l'ergol, multi perforée, annulaire et coaxiale à la cavité de répartition, de forme concave, faisant saillie dans la cavité de répartition, fixée sur le dôme de la cavité, et s'interposant dans le flux d'ergol entre le conduit d'alimentation et la plaque d'injection.

Cette grille, appliquée contre le dôme de la cavité de répartition, c'est-à-dire son sommet ou encore sa partie faisant face à la plaque d'injection, possède des bords qui sont en tout point en contact avec la paroi du dôme. De par sa forme concave dont la concavité est tournée vers le dôme, la grille vient faire saillie à l'intérieur de la cavité depuis la paroi du dôme : un canal est ainsi délimité entre la paroi intérieure de la grille et la paroi du dôme. Le conduit d'alimentation en ergol débouche au sein de ce canal : on assiste alors à la répartition de l'ergol dans la totalité du canal, soit à 360° au dessus de la plaque d'injection. La multi perforation permet alors à l'ergol de passer du canal à la cavité de répartition tout le long de la grille de répartition : l'ergol est ainsi introduit dans l'ensemble de la cavité en un grand nombre de points ce qui assure une bien meilleure homogénéité dans la cavité et donc in fine, après injection, une meilleure combustion.

De façon avantageuse et préférentielle, la répartition homogène étant désormais assurée par la grille, on peut donner au dôme de la cavité une forme bien plus idéale, semi-torique par example. Dans cet exposé, on appelle tore une forme engendrée par la rotation d'un cercle, d'une ellipse, ou tout au moins d'un contour sensiblement ellipsoïdal, autour d'un axe. Dès lors, une forme semi-torique est la forme d'un tel tore sectionné par un plan sensiblement perpendiculaire à l'axe de ce tore. Cette forme, dont la symétrie a été restaurée, permet de bien mieux maîtriser les contraintes mécaniques et thermiques : il est alors possible d'alléger les structures.

De préférence, la perforation de la grille de répartition n'est pas uniforme afin de régler la répartition de l'ergol au sein du canal et son introduction dans la cavité.

D'une façon simple, la section des orifices est variable sur la surface de la grille et peut être avantageusement croissante lorsque l'on s'éloigne du conduit d'alimentation.

Selon une autre façon simple et cumulable à la précédente, la densité d'orifices est variable sur la surface de la grille et peut être avantageusement croissante lorsque l'on s'éloigne du conduit d'alimentation.

De préférence, la section de la grille de répartition possède une section constante. A défaut, elle peut également être à section évolutive : sa section diminue alors avantageusement lorsque l'on s'éloigne du conduit d'alimentation.

De façon avantageuse et préférentielle, le conduit d'alimentation est positionné au voisinage du sommet du dôme de la cavité et sensiblement perpendiculaire à ce dernier.

Selon une autre réalisation, le conduit d'alimentation est positionné de façon excentrée sur le dôme de la cavité et forme un angle d'environ 15 à 20° avec l'axe principal de la tête d'injection.

La forme de la grille de répartition est sensiblement semi-torique.

De façon indépendante, l'invention concerne également un moteur-fusée comprenant une telle tête d'injection.

L'invention sera mieux comprise et d'autres avantages de celle-ci apparaîtront plus clairement à la lumière de la description qui va suivre d'une tête d'injection conforme à son principe, donnée uniquement à titre d'exemple et faite en référence aux dessins annexés, dans lesquels :
- La figure 1 est une vue en perspective d'une tête d'injection selon l'invention, en coupe axiale selon un plan passant par le conduit d'alimentation en premier ergol ;
- La figure 2 est une vue de détail en coupe et à plus grande échelle d'un injecteur de la tête d'injection ;
- La figure 3 est une vue partielle selon la flèche III de la figure 1, de la grille de répartition en ergol selon un mode de réalisation avantageux.

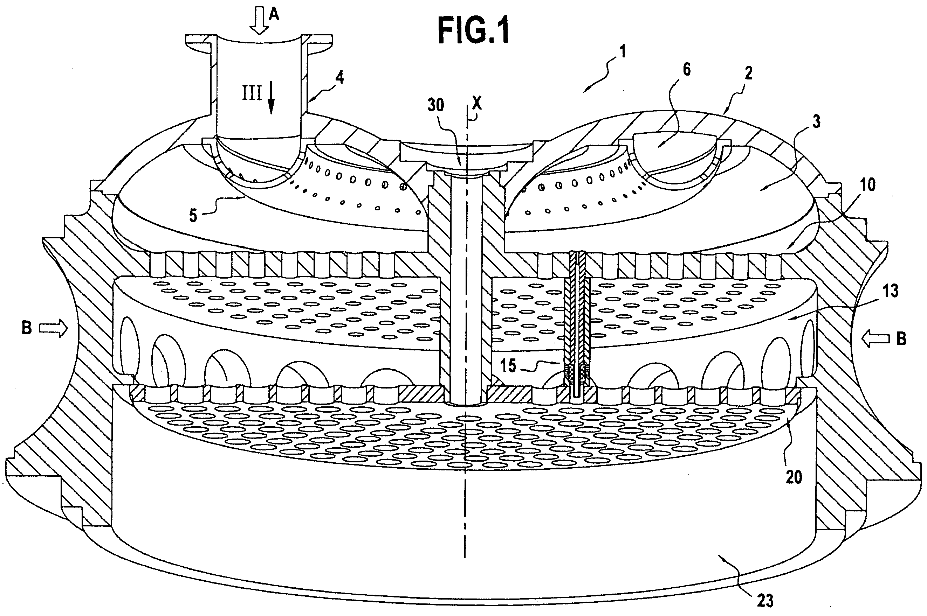

Sur la figure 1 est représentée en coupe une tête d'injection 1 d'une chambre de combustion d'un moteur-fusée conformément à une réalisation préférentielle de la présente invention.

Cette tête d'injection 1, de forme générale sensiblement cylindrique et respectant une forte symétrie cylindrique autour de son axe central longitudinal X, est fermée à son extrémité supérieure par un dôme 2, de forme sensiblement semi-torique, et ouverte à son extrémité inférieure sur la chambre de combustion du moteur-fusée. Dans cet exemple de réalisation, le dôme possède une forme semi-torique générée par la rotation autour de l'axe central X d'une demi-ellipse dont le grand axe est sensiblement perpendiculaire à l'axe central X.

Des première et seconde plaques d'injection 10 et 20 prennent place à l'intérieur de la tête d'injection 1 sur toute sa section selon des plans orthogonaux à l'axe central X.

La tête d'injection 1 est également percée longitudinalement selon son axe central pour former un conduit 30 s'étendant depuis le dôme 2 jusqu'à la deuxième plaque d'injection 20, traversant ainsi la première plaque d'injection 10, destiné au passage de la canne d'allumage (non représentée) permettant l'allumage du mélange d'ergols à la sortie de la deuxième plaque d'injection 20.

Les première et seconde plaques d'injection 10 et 20 délimitent trois cavités au sein de la tête d'injection. Une première cavité 3, annulaire, délimitée par le dôme 2 d'une part et la première plaque d'injection 10 d'autre part, est la cavité de répartition du premier ergol A. Une seconde cavité 13, annulaire, délimité par la première plaque d'injection 10 d'une part et la seconde plaque d'injection 20 d'autre part, est la cavité de répartition du deuxième ergol B. Une troisième cavité 23, délimitée à son sommet par la deuxième plaque d'injection 20 et ouverte sur son côté inférieur, est la partie supérieure de la chambre de combustion.

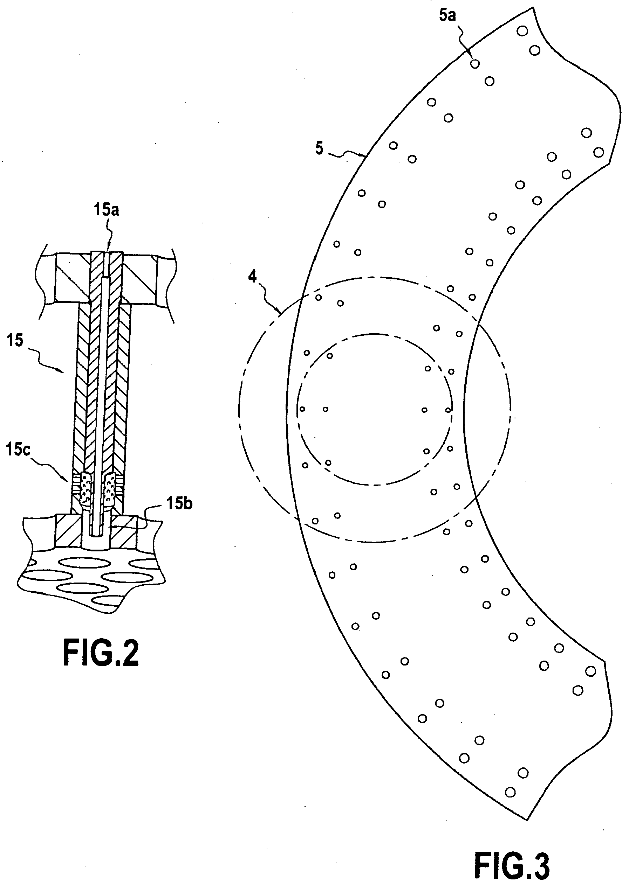

Les première et seconde plaques d'injection 10 et 20 sont percées de part en part du même nombre de multiples orifices, chaque trou de la deuxième plaque d'injection 20 faisant face à un trou de la première plaque d'injection 10. Un injecteur 15 est fixé entre chaque couple d'orifices ainsi formé (pour favoriser la lisibilité de la figure 1, un seul injecteur est représenté). La figure 2 montre que les injecteurs 15 possèdent un premier conduit axial 15a communiquant avec la cavité de répartition 3 du premier ergol A d'une part, et la partie supérieure de la chambre de combustion 23 d'autre part, et un deuxième conduit 15b périphérique communiquant avec la cavité de répartition 20 du deuxième ergol B par de petits orifices 15c d'une part, et la partie supérieure de la chambre de combustion 23 d'autre part.

En fonctionnement normal, le premier ergol A, fréquemment du dioxygène liquide, est admis dans la cavité de répartition 3 du premier ergol A par l'intermédiaire du conduit d'alimentation 4 en premier ergol A où il se répartit de façon homogène grâce à la grille de répartition 5 multi perforée dont le fonctionnement sera détaillé ultérieurement. Il pénètre alors dans le conduit central 15a de chaque injecteur 15. Le deuxième ergol B, fréquemment du dihydrogène liquide, est admis dans la cavité de répartition 13 du deuxième ergol B par l'intermédiaire d'une pluralité d'orifices répartis sur la paroi périphérique de la cavité de réparation 13 du deuxième ergol B. Le deuxième ergol B s'y répartit de façon homogène et pénètre par les petits orifices 15c dans le conduit périphérique 15b de chaque injecteur 15. Les premier et second ergols A et B s'échappent alors des injecteur 15 dans une disposition géométrique telle que leur mélange est favorisé afin de permettre la combustion.

Afin de permettre une combustion efficace, il est nécessaire que la répartition des ergols dans l'ensemble des injecteurs 15 soit homogène : cela est le résultat d'une bonne répartition dans chacune des cavités de répartition 3 et 13. Cette répartition homogène dans la cavité de répartition 3 du premier ergol A est assurée par la grille de répartition 5 multi perforée de l'ergol A. De forme générale annulaire, concave et semi-torique, cette grille 5 est fixée sur le dôme 2 de la cavité 3, plus précisément au sommet du dôme 2, de façon coaxiale et de telle sorte que le conduit d'alimentation 4 en premier ergol A débouche entre la grille 5 et le dôme 2 : elle fait alors saillie dans la cavité de répartition 3 et forme ainsi un canal 6 entre sa paroi interne et la paroi du dôme 2. Ses bords latéraux étant en tout point en contact avec le dôme 2, elle s'interpose complètement dans le flux d'ergol A entre le conduit d'alimentation 4 et la première plaque d'injection 10 : le conduit d'alimentation 4 en ergol A débouchant au sein de ce canal 6, on assiste à la répartition de l'ergol dans la totalité du canal, sur 360° au dessus de la plaque d'injection. La multi perforation permet alors à l'ergol de passer du canal 6 à la cavité de répartition tout le long de la grille de répartition : l'ergol est ainsi introduit dans l'ensemble de la cavité en un grand nombre de points ce qui assure une bonne homogénéité dans la cavité et donc in fine, après injection, une meilleure combustion.

Afin d'assurer une meilleure répartition de l'ergol A, la perforation de la grille de répartition 5 est avantageusement non uniforme, ce qui favorise notamment le remplissage de la totalité du canal 6. Dans un mode de réalisation préférentiel, la figure 3 montre que la section des orifices 5a de la grille de répartition 5 est sensiblement croissante lorsque l'on s'éloigne du conduit d'alimentation 4. Selon une autre possibilité, indépendante ou cumulable à la précédente, la densité d'orifice peut être variable, par exemple sensiblement croissante lorsque l'on s'éloigne du conduit d'alimentation.

Dans le mode de réalisation représenté en figure 1, la section de la grille de répartition 5 est constante mais selon un autre mode de réalisation elle pourrait être évolutive et diminuer sensiblement lorsque l'on s'éloigne du conduit d'alimentation.

Avantageusement, le conduit d'alimentation 4 en premier ergol A est positionné au voisinage du sommet du dôme 2 et sensiblement perpendiculaire à ce dernier : cette position permet au dôme 2 d'avoir une forme plus adaptée à une bonne maîtrise des contraintes thermiques et mécaniques.

Selon un autre mode de réalisation, le conduit d'alimentation 4 en premier ergol A peut être plutôt excentré vers la périphérie du dôme 2, formant alors un angle d'environ 15 à 20°, par exemple, avec la perpendiculaire au sommet du dôme 2.

## Revendications

1. Tête d'injection (1) d'une chambre de combustion d'un moteur-fusée, comprenant :
- un conduit d'alimentation (4) en ergol (A),
- une cavité de répartition (3) de l'ergol (A), annulaire, dans laquelle débouche le conduit d'alimentation (4),
- une plaque d'injection (10) venant fermer une face de la cavité de répartition (3), dans laquelle sont percés des trous destinés à accueillir des injecteurs (15) afin d'injecter l'ergol (A) dans la chambre de combustion,
comprenant en outre une grille de répartition (5) de l'ergol (A) multi perforée, annulaire et coaxiale à la cavité de répartition (3), faisant saillie dans la cavité de répartition (3), fixée sur le dôme (2) de la cavité (3), et s'interposant dans le flux d'ergol (A) entre le conduit d'alimentation (4) et la plaque d'injection (10), **caractérisée en ce que** la grille (5) est de forme sensiblement semi-torique.

2. Tête d'injection (1) selon la revendication 1, **caractérisée en ce que** le dôme (2) de la cavité de répartition (3) possède une forme sensiblement semi-torique.

3. Tête d'injection (1) selon la revendication 1 ou 2, **caractérisée en ce que** la perforation de la grille de répartition (5) n'est pas uniforme.

4. Tête d'injection (1) selon la revendication 3, **caractérisée en ce que** la section des orifices (5a) est variable sur la surface de la grille (5).

5. Tête d'injection (1) selon la revendication 4, **caractérisée en ce que** la section des orifices (5a) augmente sensiblement lorsque l'on s'éloigne du conduit d'alimentation (4).

6. Tête d'injection (1) selon l'une quelconque des revendications 3 à 5, **caractérisée en ce que** la densité d'orifices (5a) est variable sur la surface de la grille (5).

7. Tête d'injection (1) selon la revendication 6, **caractérisée en ce que** la densité d'orifices (5a) augmente sensiblement lorsque l'on s'éloigne du conduit d'alimentation (4).

8. Tête d'injection (1) selon l'une quelconque des revendications 1 à 7, **caractérisée en ce que** la grille de répartition (5) possède une section constante.

9. Tête d'injection (1) selon l'une quelconque des revendications 1 à 7, **caractérisée en ce que** la grille de répartition (5) possède une section évolutive.

10. Tête d'injection (1) selon la revendication 9, **caractérisée en ce que** la section de la grille de répartition (5) diminue sensiblement lorsque l'on s'éloigne du conduit d'alimentation (4).

11. Tête d'injection (1) selon l'une quelconque des revendications 2 à 10, **caractérisée en ce que** le conduit d'alimentation (4) est positionné au voisinage du sommet du dôme (2) de la cavité (3) et sensiblement perpendiculaire à ce dernier.

12. Tête d'injection (1) selon l'une quelconque des revendications 2 à 10, **caractérisée en ce que** le conduit d'alimentation (4) est positionné de façon excentrée sur le dôme (2) de la cavité (3) et forme un angle d'environ 15 à 20° avec la perpendiculaire au sommet de ce dôme (2).

13. Moteur-fusée **caractérisé en ce qu'**il est équipé d'une tête d'injection (1) selon l'une des revendications 1 à 12.

## Patentansprüche

1. Einspritzkopf (1) einer Brennkammer eines Raketenmotors, umfassend:
- eine Leitung (4) zur Versorgung mit Ergol (A),
- einen ringförmigen Ergol (A)-Verteilungshohlraum (3), in den die Versorgungsleitung (4) mündet,
- eine Einspritzplatte (10), die eine Seite des Ergol (A)-Verteilungshohlraums (3) verschließt, in die Löcher gebohrt sind, die dazu bestimmt sind, Einspritzdüsen (15) aufzunehmen, um das Ergol (A) in die Brennkammer einzuspritzen,
ferner umfassend ein mehrfach perforiertes Verteilungsgitter (5), das ringförmig und zu dem Verteilungshohlraum (3) koaxial ist, in den Verteilungshohlraum (3) hineinragt, auf der Kuppel (2) des Hohlraums (3) befestigt ist und in dem Ergolstrom (A) zwischen der Versorgungsleitung (4) und der Einspritzplatte (10) angeordnet ist, **dadurch gekennzeichnet, dass** das Gitter (5) von im Wesentlichen halb-torischer Form ist.

2. Einspritzkopf (1) nach Anspruch 1, **dadurch gekennzeichnet, dass** die Kuppel (2) des Verteilungshohlraums (3) eine im Wesentlichen halb-torische Form besitzt.

3. Einspritzkopf (1) nach Anspruch 1 oder 2, **dadurch gekennzeichnet, dass** die Perforation des Verteilungsgitters (5) nicht gleichmäßig ist.

4. Einspritzkopf (1) nach Anspruch 3, **dadurch gekennzeichnet, dass** der Querschnitt der Öffnungen (5a) auf der Oberfläche des Gitters (5) variabel ist.

5. Einspritzkopf (1) nach Anspruch 4, **dadurch gekennzeichnet, dass** der Querschnitt der Öffnungen (5a) bei Entfernung von der Versorgungsleitung (4) wesentlich größer wird.

6. Einspritzkopf (1) nach einem der Ansprüche 3 bis 5, **dadurch gekennzeichnet, dass** die Dichte an Öffnungen (5a) auf der Oberfläche des Gitters (5) variabel ist.

7. Einspritzkopf (1) nach Anspruch 6, **dadurch gekennzeichnet, dass** die Dichte an Öffnungen (5a) bei Entfernung von der Versorgungsleitung (4) wesentlich größer wird.

8. Einspritzkopf (1) nach einem der Ansprüche 1 bis 7, **dadurch gekennzeichnet, dass** das Verteilungsgitter (5) einen konstanten Querschnitt besitzt.

9. Einspritzkopf (1) nach einem der Ansprüche 1 bis 7, **dadurch gekennzeichnet, dass** das Verteilungsgitter (5) einen evolutiven Querschnitt besitzt.

10. Einspritzkopf (1) nach Anspruch 9, **dadurch gekennzeichnet, dass** der Querschnitt des Verteilungsgitters (5) bei Entfernung von der Versorgungsleitung (4) wesentlich geringer wird.

11. Einspritzkopf (1) nach einem der Ansprüche 2 bis 10, **dadurch gekennzeichnet, dass** die Versorgungsleitung (4) in der Nähe der Spitze der Kuppel (2) des Hohlraums (3) und im Wesentlichen senkrecht auf diese angeordnet ist.

12. Einspritzkopf (1) nach einem der Ansprüche 2 bis 10, **dadurch gekennzeichnet, dass** die Versorgungsleitung (4) exzentrisch auf der Kuppel (2) des Hohlraums (3) positioniert ist und einen Winkel von ungefähr 15 bis 20° mit der Senkrechten auf die Spitze der Kuppel (2) bildet.

13. Raketenmotor, **dadurch gekennzeichnet, dass** er mit einem Einspritzkopf (1) nach einem der Ansprüche 1 bis 12 ausgestattet ist.

## Claims

1. An injection head (1) for a rocket engine combustion chamber, comprising:
• a feed duct (4) for feeding a propellant (A);
• a distribution cavity (3) for the propellant (A), the cavity being annular and having the feed duct (4) opening out therein; and
• an injection plate (10) closing a face of the distribution cavity (3), having holes pierced therein for receiving injectors (15) in order to inject the propellant (A) into the combustion chamber;
further including a multiply-perforated distribution grid (5) for distributing the propellant (A), annular and coaxial with the distribution cavity (3), projecting into the distribution cavity (3), fastened to the dome (2) of the cavity (3), and interposed in the stream of propellant (A) between the feed duct (4) and the injection plate (10), **characterized in that** the grid (5) is substantially semi-toroidal in shape.

2. An injection head (1) according to claim 1, **characterized in that** the dome (2) of the distribution cavity (3) is substantially semi-toroidal in shape.

3. An injection head (1) according to claim 1 or claim 2, **characterized in that** the distribution grid (5) is perforated in non-uniform manner.

4. An injection head (1) according to claim 3, **characterized in that** the section of the orifices (5a) varies over the surface of the grid (5).

5. An injection head (1) according to claim 4, **characterized in that** the section of the orifices (5a) increases perceptibly on going further away from the feed duct (4).

6. An injection head (1) according to any one of claims 3 to 5, **characterized in that** the density of the orifices (5a) varies over the surface of the grid (5).

7. An injection head (1) according to claim 6, **characterized in that** the density of the orifices (5a) increases perceptibly on going away from the feed duct (4).

8. An injection head (1) according to any one of claims 1 to 7, **characterized in that** the distribution grid (5) is of constant section.

9. An injection head (1) according to any one of claims 1 to 7, **characterized in that** the distribution grid (5) is of varying section.

10. An injection head (1) according to claim 9, **characterized in that** the section of the distribution grid (5) diminishes perceptibly on going away from the feed duct (4).

11. An injection head (1) according to any one of claims 2 to 10, **characterized in that** the feed duct (4) is positioned in the neighborhood of the top of the dome (2) of the cavity (3) and is substantially perpendicular thereto.

12. An injection head (1) according to any one of claims 2 to 10, **characterized in that** the feed duct (4) is positioned in off-center manner on the dome (2) of the cavity (3) and forms an angle of about 15° to 20° with the perpendicular to the top of the dome (2).

13. A rocket engine, **characterized in that** it is fitted with an injection head (1) according to any one of claims 1 to 12.
